# EUROPÄISCHE PATENTSCHRIFT

(11) **EP 2 113 754 B1**
(45) Veröffentlichungstag und Bekanntmachung des Hinweises auf die Patenterteilung: **15.06.2011**
(21) Anmeldenummer: 09005633.4
(22) Anmeldetag: 22.04.2009
(51) Int. Cl.: G01G 19/44, G01G 21/22, G01G 21/28

(54) **Babywaage**
Baby scale
Pèse-bébé

(30) Priorität: 02.05.2008 DE 102008021931
(43) Veröffentlichungstag der Anmeldung: 04.11.2009
(73) Patentinhaber: Soehnle Professional GmbH & Co. KG, 71522 Backnang (DE)
(72) Erfinder: Gester, Stephan, 53343 Wachtberg-Pech (DE); Schurr, Michael, 71540 Murrhardt (DE); Stahl, Albrecht, 71560 Sulzbach (DE)
(74) Vertreter: Hoffmann, Jürgen

(56) Entgegenhaltungen:
- WO-A-2007/087799
- DE-A1-102006 004 961
- DE-A1-102006 004 962
- DE-A1-102006 034 871

## Beschreibung

Die vorliegende Erfindung betrifft Babywaage mit einer Waagschale (1) zur Aufnahme eines Babys, einer die Waagschale (1) tragenden Messeinrichtung zur Ermittlung des Gewichts des Babys und einer Anzeige (2) zum Anzeigen des ermittelten Gewichts, wobei die Messeinrichtung mehrere Wägezellen umfasst und wobei die Waagschale (1) zwei Schalenhälften (3, 4) aufweist, wobei die beiden Schalenhälften (3,4) Mittel (5) zum mechanischen und elektrischen Verbinden in eine Wägeposition aufweisen und in eine Aufbewahrungsposition zusammenlegbar sind.

Eine Babywaage der eingangs genannten Art ist aus der DE 10 2006 034 871 A1 bekannt. Die bekannte Babywaage weist eine Waagschale zur Aufnahme eines Babys, eine die Waagschale tragende Messeinrichtung zur Ermittlung des Gewichts des Babys und eine Anzeige zum Anzeigen des ermittelten Gewichts auf. Die Messeinrichtung umfasst mehrere Wägezellen, so dass das Gewicht des Babys auf einfache Weise bei Aufstellung der Babywaage auf einen Untergrund ermittelbar ist. Die Waagschale weist zwei Schalenhälften auf, die mittels eines Scharniers zusammenklappbar sind, um eine Aufbewahrungs- oder Transportposition der Waagschale bereitzustellen.

Bei der bekannten Babywaage ist problematisch, dass der zum Zusammenklappen erforderliche Schamiermechanismus mechanisch anfällig ist. Um einen sicheren Schamiermechanismus zu realisieren, muss der Schamiermechanismus relativ groß ausgebildet werden, was eine unschöne Optik durch von den Schalenhälften abstehende Scharnierelemente und meist ein hohes Gewicht zur Folge hat, wobei ein hohes Gewicht im Hinblick auf einen Transport der Waage unerwünscht ist.

Des Weiteren besteht aufgrund abstehender Scharnierelemente die Gefahr von Verletzungen für ein zu wiegendes Baby. Schließlich ist ein derartiger -Schamiermechanismus auch hinsichtlich üblicher Hygieneanforderungen ungünstig da sich in dem Scharniermechanismus Schmutzpartikel, Babypuder- und -ölreste und dergleichen festsetzen können. Diese Reste können einen Nährboden für Bakterien bilden, die insbesondere bei der Pflege von Neugeborenen zu vermeiden sind.

Aus DE 10 2006 004 961 A1 ist eine Waage mit einer zusammenklappbaren und/oder zusammenschiebbaren Waagschale bekannt. Die Waagschale ist wahlweise in eine Gabrauchsstellung oder eine Transportstellung überführbar.

Aus DE 10 2006 004 962 A1 ist eine Babywaage bekannt, die eine Vorrichtung zur vorübergehenden Aufbewahrung von Babyutensilien, wie beispielsweise Babypflegemitteln und/oder Windeln und/oder Tüchern aufweist.

Der vorliegenden Erfindung liegt daher die Aufgabe zugrunde, eine Babywaage der eingangs genannten Art derart auszugestalten und weiterzubilden, dass eine problemlose und sichere Handhabung der Babywaage mit konstruktiv einfachen Mitteln erreicht ist.

Erfindungsgemäß ist die voranstehende Aufgabe durch eine Babywaage mit den Merkmalen des Patentanspruchs 1 gelöst.

Erfindungsgemäß ist zunächst erkannt worden, dass eine sichere Aufbewahrungs- oder Transportposition der Babywaage auch ohne eine Ausgestaltung eines Klappmechanismus mit Scharnieren bezüglich der Schalenhälften möglich ist. Hierzu weisen die beiden Schalenhälften in weiter erfindungsgemäßer Weise Mittel zum mechanischen und elektrischen Verbinden der Schalenhälften auf, um eine sichere Wägeposition zu erreichen. Darüber hinaus sind die beiden Schalenhälften in eine Aufbewahrungsposition zusammenlegbar, wodurch eine kompakte und platzsparende Anordnung der Schalenhälften erreicht ist. Die Nachteile des bekannten Schamiermechanismus sind hierdurch vermieden.

Folglich ist mit der erfindungsgemäßen Babywaage eine Babywaage angegeben, bei der eine problemlose und sichere Handhabung der Babywaage mit konstruktiv einfachen Mitteln erreicht ist.

In konstruktiv besonders einfacher Weise sind die Mittel durch einen Steckelemente aufweisenden Steckmechanismus gebildet. Dieser Steckmechanismus ermöglicht ein einfaches Zusammenstecken der Schalenhälften, um die Wägeposition zu erreichen. Umgekehrt ist mittels des Steckmechanismus ein einfaches Entkoppeln der beiden Schalenhälften zum Zusammenlegen der Schalenhälften ermöglicht. Die Handhabung der Babywaage mittels des Steckmechanismus ist völlig problemlos und einfach.

In besonders vorteilhafter Weise könnten die Steckelemente eine Positionierfunktion und/oder Rastfunktion aufweisen. Mit anderen Worten könnte über die Steckelemente die sichere Positionierung der Schalenhälften zueinander vorgegeben sein, um die Waagschale für den Gebrauch bereitzustellen. Alternativ oder zusätzlich hierzu könnten die Steckelemente eine Rastfunktion aufweisen, die ein unbeabsichtigtes Trennen der Schalenhälften vermeidet. Dabei können die Steckelemente derart ausgebildet sein, dass eine per Hand erzeugbare und wieder lösbare Verklemmung der Steckelemente möglich ist.

Bei einer konkreten Ausgestaltung könnten die Steckelemente durch Rasthaken oder Nut- und Federelemente gebildet sein.

Die Steckelemente könnten in besonders praktischer Weise in den Stirnflächen oder Kontaktflächen der Schalenhälften ausgebildet sein. Die Stirnflächen oder Kontaktflächen sind diejenigen Flächen, die im zusammengesetzten Zustand der Schalenhälften einander gegenüberliegen oder sogar in Kontakt sind. Dies hat den Vorteil, dass die Steckelemente bzw. der Steckmechanismus im zusammengesetzten Zustand der Schalenhälfte quasi verborgen und unsichtbar ist; so dass weder eine Verletzungsgefahr für das zu wiegende Baby noch eine Verschmutzungsgefahr des Steckmechanismus besteht. Insoweit bietet die Ausgestaltung mit in den Stirn- oder Kontaktflächen der Schalenhälften ausgebildetem Steckmechanismus eine besonders sichere Ausgestaltung der Babywaage.

Die Messeinrichtung der Babywaage weist mehrere Wägezellen auf, die üblicherweise unter beiden Schalenhälften vorzusehen sind. Allerdings ist es besonders praktisch, die Stromversorgung und Messelektronik der Babywaage in kompakter Weise einer Schalenhälfte zuzuordnen. In besonders vorteilhafter Weise könnten daher die Steckelemente zur im Hinblick auf ihre Stromversorgung und/oder im Hinblick auf eine Signalübertragung erforderlichen elektrischen Kontaktierung der Wägezellen ausgebildet sein. Die Steckelemente gewährleisten in diesem Fall sowohl eine elektrische als auch eine mechanische Verbindung der beiden Schalenhälften. Dabei liefern sie die elektrische Verbindung zu den Wägezellen in derjenigen Schalenhälfte, die die Stromversorgung nicht aufweist. In gleicher Weise kann eine Signalübertragung von den Wägezellen dieser Schalenhälfte zur anderen Schalenhälfte und damit zur Messeinrichtung über die Steckelemente erfolgen. Hierzu könnten in den Steckelementen geeignete elektrische Leiter angeordnet sein, die im zusammengesetzten Zustand der Schalenhälften miteinander in Kontakt sind.

Bei einer konstruktiv besonders einfachen Ausgestaltung könnten die Steckelemente mindestens einen einer Schalenhälfte zugeordneten Zapfen oder Stecker und mindestens eine der anderen Schalenhälfte zugeordnete entsprechende Aufnahme für den Zapfen oder Stecker aufweisen. Im zusammengesetzten Zustand der Schalenhälften befindet sich der Zapfen oder Stecker dann in der entsprechenden Aufnahme.

Im Hinblick auf eine besonders sichere Verbindung der beiden Schalenhälften könnte jede Schalenhälfte jeweils mindestens einen Zapfen oder Stecker und jeweils mindestens eine Aufnahme aufweisen. Zur sicheren Positionierung der Schalenhälften zueinander sollten mindestens zwei Zapfen oder Stecker und mindestens zwei entsprechende Aufnahmen vorgesehen sein.

In herstellungstechnisch besonders einfacher Weise könnten die Schalenhälften aus Kunststoff, vorzugsweise Hartkunststoff, gefertigt sein. Es bietet sich an, beide Schalenhälften spritzgusstechnisch herzustellen. Ebenso ist es denkbar, die Schalenhälften zu extrudieren bzw. im Tiefziehverfahren herzustellen.

Im Hinblick auf einen komfortablen Einsatz der Babywaage könnten die beiden Schalenhälften auf der Innenseite gepolstert sein. Die Polsterung könnte unmittelbar auf die Oberfläche der Schalenhälften aufgebracht sein. Ebenso ist es denkbar, dass die Polsterung entfernbar ist, was zu Reinigungszwecken besonders vorteilhaft ist. Jedenfalls sollte die Polsterung feuchtigkeitsabweisend und abwaschbar ausgeführt sein. Es bietet sich diesbezüglich in besonders einfacher Weise eine Polsterung aus einem Weichkunststoff an, der dort dauerhaft oder entfernbar vorgesehen sein kann.

Zur sicheren Aufstellung der Babywaage könnten auf der Außenseite der Schalenhälften zum Aufstellen der Wagschale dienende Füße vorgesehen sein. Die Füße könnten in vorteilhafter Weise derart positioniert sein, dass sie die Schalenhälften im aufgestellten Zustand in der Wägeposition halten. Zur Gewährleistung eines besonders sicheren Stands der Schalenhälften und damit der Babywaage könnten je Schalenhälfte drei Füße vorgesehen sein.

Hinsichtlich einer besonders platzsparenden und eleganten Ausgestaltung könnten die Füße elektronische Wägezellen enthalten. Hierdurch ist einerseits eine sichere und andererseits eine besonders geschützte Unterbringung der Wägezellen ermöglicht.

Zur Gewährleistung einer besonders gut sichtbaren Anordnung der Anzeige könnte die Anzeige in einer der Schalenhälften, vorzugsweise auf der Außenseite im Randbereich, angeordnet sein. Die Anzeige könnte in vorteilhafter Weise als LCD ausgebildet sein, wodurch eine besonders stromsparende Anzeige bereitgestellt ist.

In besonders einfacher Weise könnte die gesamte Elektronik nebst Batterie oder Akkumulator einer Schalenhälfte zugeordnet sein. Hierdurch ist eine kompakte Anordnung dieser Bauteile innerhalb einer Schalenhälfte ermöglicht.

Grundsätzlich könnten die beiden Schalenhälften in vorteilhafter Weise sowohl in der verbundenen Wägeposition als auch in der zusammengelegten Aufbewahrungsposition in ihrer Position zueinander arretierbar und/oder verrastbar sein. Insbesondere bezüglich eines sicheren Zusammenlegens der Schalenhälften könnten die Schalenhälften über eine Nut- und Federanordnung entlang ihrer Außenränder verfügen. Hierdurch ist ein sicheres Zusammenlegen und gleichzeitig eine Arretierung gegen ein Verschieben der Schalenhälften relativ zueinander realisiert. Alternativ oder zusätzlich hierzu könnten die Schalenhälften mittels Rasthaken zusammenlegbar und arretierbar sein. Bei der Auswahl der entsprechenden Arretierelemente ist auf den jeweiligen Anwendungsfall anzustellen.

In besonders sicherer Weise könnten die Schalenhälften über den Schalenhälften zugeordnete Magnete oder Elektromotoren mechanisch in der Wägeposition und/oder in der Aufbewahrungsposition arretierbar und/oder verriegelbar sein. Hierzu könnten elektrisch angetriebene Verriegelungselemente und/oder Arretierelemente vorgesehen sein.

In weiter vorteilhafter Weise bilden die beiden Schalenhälften, die im gekoppelten Zustand die Wagschale bilden, im zusammengelegten Zustand eine Art Gehäuse, welches einen Innenraum aufweist. Dieses durch die Schalenhälften gebildete Gehäuse ist im Rahmen einer bevorzugten Ausführungsform im Bereich der gegenseitigen Verbindung der Schalenhälften zumindest teilweise offen. Diese Öffnung ergibt sich aus der gewölbten Ausgestaltung der Schalenhälften.

Bei einer weiter bevorzugten Ausführungsform könnte die Öffnung im Gehäuse durch eine Bodenplatte mit Schließ- und Arretierfunktion verschließbar sein. Durch die Verschließbarkeit der Öffnung könnte das Gehäuse in besonders praktischer Weise zur Aufbewahrung von diversen Utensilien für die Babyversorgung und Babypflege verwendet werden. Die Verschließbarkeit sichert den Gehäuseinhaft dabei vor einem unbeabsichtigten Herausfallen. Des Weiteren könnte eine derartige Bodenplatte derart ausgebildet sein, dass sie letztendlich den Zusammenhalt der zusammengelegten Schalenhälften gewährleistet. Hierzu könnte sie im angeordneten Zustand über die Außenränder der Schalenhälften übergreifen. Die Bodenplatte dient des Weiteren zum Aufstellen der zusammengesetzten Einheit aus Schalenhälften und Bodenplatte.

In besonders praktischer Weise könnte die Bodenplatte Steckelemente zur Kopplung mit den Steckelementen der Schalenhälften aufweisen. Hierbei könnten die zur Kopplung der Schalenhälften ausgebildeten Steckelemente in einer Art Doppeffunktion auch die Ankopplung der Bodenplatte an die Schalenhälften ermöglichen. Die Steckelemente der Bodenplatte müssen dabei jedoch keine elektrische Verbindungsfunktion aufweisen.

Alternativ oder zusätzlich hierzu könnte die Bodenplatte über den Schalenhälften und der Bodenplatte zugeordnete Magnete mit den Schalenhälften koppelbar sein. Auch hierdurch ist eine sichere Kopplung zwischen Schalenhälften und Bodenplatte gewährleistet.

In weiter vorteilhafter Weise könnte die Bodenplatte als Einschub ausgebildet sein, wobei die Bodenplatte zum Teil in das Gehäuse hineinragen könnte.

Im Konkreten könnte sich der Einschub mit einem durch eine umlaufende Wandung gebildeten Stauraum in das Gehäuse hinein erstrecken. Dieser Stauraum des Einschubs konnte zur Aufbewahrung von Utensilien für Babys dienen.

Die Bodenplatte dient - wie oben erwähnt - unter anderem zur vertikalen Positionierung der Anordnung aus den Schalenhälften und der Bodenplatte. Zum sicheren Transport dieser Anordnung könnte das Gehäuse einen oberen Tragegriff aufweisen, der im zusammengelegten Zustand durch den beiden Schalenhälften zugeordnete Griffteile gebildet ist. Hierdurch ist ein einfaches Ergreifen der Schalenhälften mit angekoppelter Bodenplatte möglich.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und anderseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen:
Fig. 1 in einer perspektivischen und schematischen Darstellung ein Ausführungsbeispiel einer erfindungsgemäßen Babywaage,
Fig. 2 in einer perspektivischen und schematischen Darstellung das Ausführungsbeispiel aus Fig. 1 in der Wägeposition,
Fig. 3 in einer perspektivischen und schematischen Darstellung das Ausführungsbeispiel auf Fig. 1 in der Aufbewahrungsposition,
Fig.4 in einer perspektivischen und schematischen Darstellung das Ausführungsbeispiel aus Fig. 1 in der Aufbewahrungsposition mit einer Bodenplatte und
Fig. 5 in einer perspektivischen und schematischen Darstellung das Ausführungsbeispiel aus Fig. 1 in der Aufbewahrungsposition mit angekoppelter Bodenplatte.

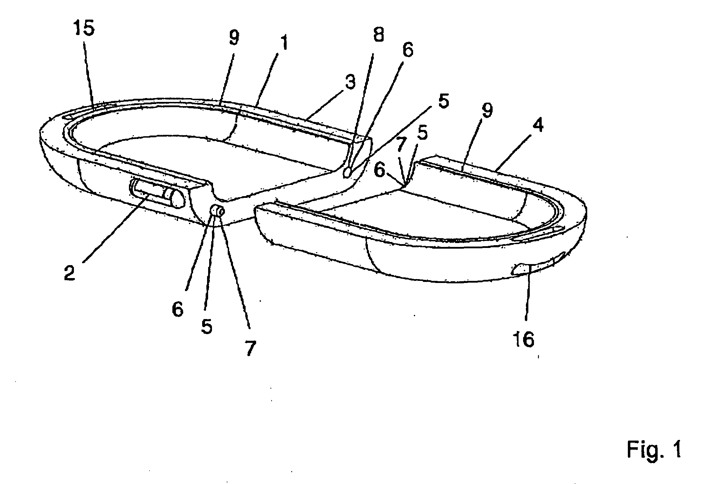

Fig. 1 zeigt in einer perspektivischen und schematischen Darstellung ein Ausführungsbeispiel einer erfindungsgemäßen Babywaage. Die Babywaage weist eine Waagschale 1 zur Aufnahme eines Babys, eine die Waagschale 1 tragende und hier nicht gezeigte Messeinrichtung zur Ermittlung des Gewichts des Babys und eine Anzeige 2 zum Anzeigen des ermittelten Gewichts auf. Die Messeinrichtung umfasst mehrere Wägezellen. Die Waagschale 1 weist zwei Schalenhälften 3 und 4 auf, die in Fig. 1 voneinander separiert sind. Im Hinblick auf eine problemlose und sichere Handhabung der Babywaage weisen die beiden Schalenhälften 3 und 4 Mittel 5 zum mechanischen und elektrischen Verbinden in eine Wägeposition auf. Des Weiteren sind die beiden Schalenhälften 3 und 4 in eine Aufbewahrungsposition zusammenlegbar.

Die Mittel 5 sind durch einen Steckelemente 6 aufweisenden Steckmechanismus gebildet. Die Steckelemente 6 weisen sowohl eine Positionierfunktion als auch eine Rastfunktion auf, da die Schalenhälften 3 und 4 im zusammengesteckten Zustand in der vorgegebenen Weise positioniert sind. Des Weiteren sind die Steckelemente 6 derart dimensioniert, dass ein per Hand wieder lösbares Verklemmen zwischen den Steckelementen 6 im zusammengesteckten Zustand der Schalenhälften 3 und 4 erreichbar ist.

Die Steckelemente 6 liefern eine elektrische Kontaktierung zwischen den beiden Schalenhälften 3 und 4. Diese elektrische Kontaktierung ist einerseits im Hinblick auf die Stromversorgung der Wägezellen und andererseits im Hinblick auf eine Signalübertragung von Signalen der Wägezellen ausgebildet.

Die Steckelemente 6 weisen zwei Stecker 7 und zwei Aufnahmen 8 auf, die wechselseitig den Schalenhälften 3 und 4 zugeordnet sind. Mit anderen Worten weist jede Schalenhälfte 3 und 4 einen Stecker 7 und eine Aufnahme 8 auf, die mit einer entsprechenden Aufnahme 8 und einem entsprechenden Stecker 7 der anderen Schalenhälfte 4 und 3 zusammenwirken.

Die Anzeige 2 ist als LCD ausgebildet und auf der Außenseite im Randbereich der Schalenhälfte 3 angeordnet. Die gesamte Elektronik nebst Batterie oder Akkumulator ist in der Schalenhälfte 3 angeordnet.

Die Schalenhälften 3 und 4 weisen eine Nut- und Federanordnung 9 auf, die eine Arretierung im zusammengelegten Zustand der Schalenhälften 3 und 4 gewährleistet.

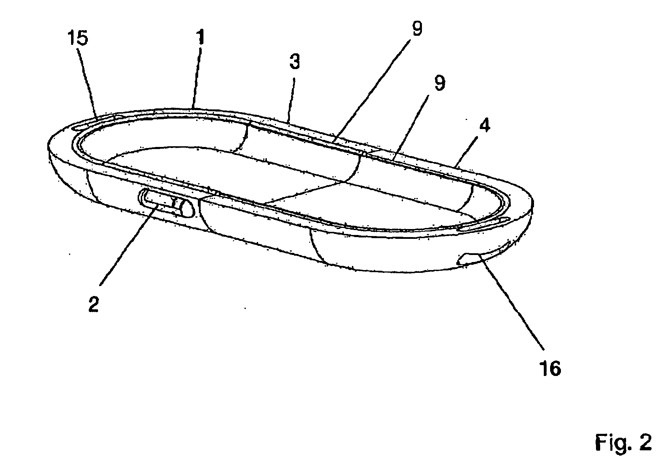

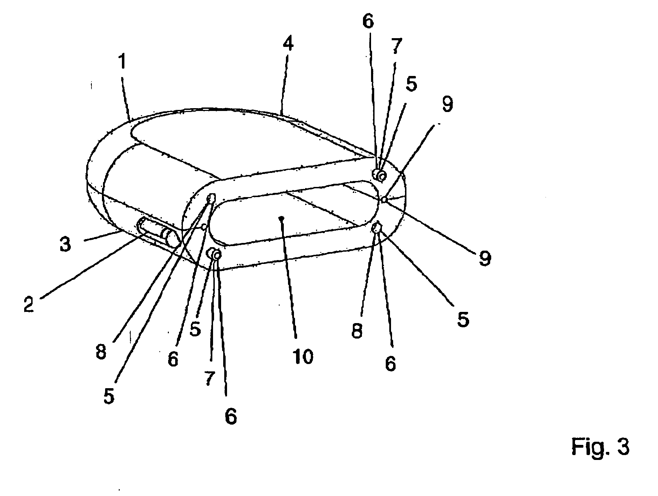

Die Fig. 2 und 3 zeigen in schematischen und perspektivischen Ansichten das Ausführungsbeispiel aus Fig. 1 in der zusammengesteckten Wägeposition und in der zusammengelegten Aufbewahrungsposition. In Fig. 3 ist erkennbar, dass die beiden Schalenhälften 3 und 4 im zusammengelegten Zustand ein Gehäuse 10 bilden. Das Gehäuse 10 ist im Bereich der gegenseitigen Verbindung der Schalenhälften 3 und 4 offen ausgebildet. Das Gehäuse 10 kann zur Aufbewahrung von Utensilien für Babys verwendet werden.

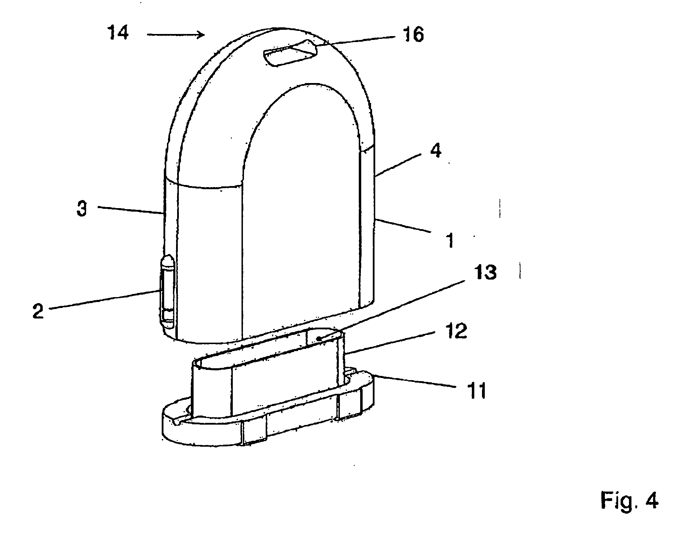

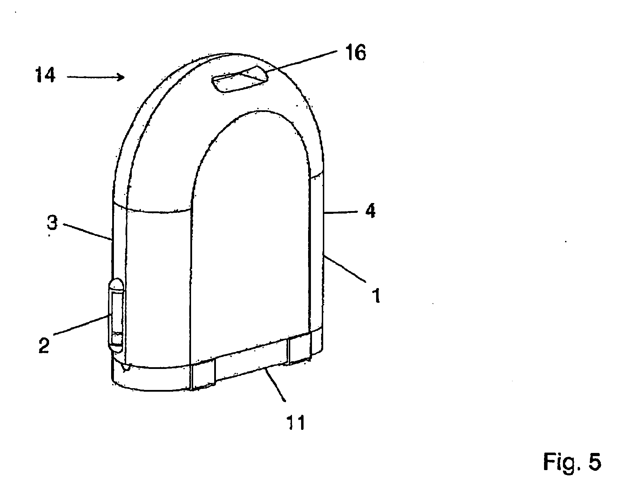

Die Fig. 4 und 5 zeigen in schematischen und perspektivischen Darstellungen die Schalenhälften 3 und zu in der zusammengelegten Aufbewahrungsposition. Zum Verschließen des in Fig. 3 gezeigten Gehäuses 10 dient eine Bodenplatte 11, die eine Schließ- und Arretierfunktion aufweist. Im Konkreten weist die Bodenpatte 11 hier nicht gezeigte Steckelemente zur Kopplung mit den Steckelementen 6 der Schalenhälften 3 und 4 auf. Hierdurch gewährleistet die Bodenplatte 11 eine sichere Aufbewahrungsposition der Schalenhälften 3 und 4.

Gemäß Fig. 4 ist die Bodenplatte 11 als Einschub 12 ausgebildet oder weist die Bodenplatte 11 einen Einschub 12 auf. Der Einschub 12 bildet durch eine umlaufende Wandung einen Stauraum 13 für Utensilien für Babys.

Das durch die Schalenhälften 3 und 4 im zusammengelegten Zustand gebildete Gehäuse 10 weist einen oberen Tragegriff 14 auf, der durch den beiden Schalenhälften 3 und 4 zugeordnete Griffteile 15 und 16 gebildet ist.

Hinsichtlich weiterer vorteilhafter Ausgestaltungen der erfindungsgemäßen Babywaage wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel der erfindungsgemäßen Babywaage lediglich zur Erörterung der beanspruchten Lehre dient, diese jedoch nicht auf das Ausführungsbeispiel einschränkt.

### Bezugszeichenliste

- 1: Waagschale
- 2: Anzeige
- 3: Schalenhälfte
- 4: Schalenhälfte
- 5: Mittel zum mechanischen und elektrischen Verbinden
- 6: Steckelement
- 7: Stecker
- 8: Aufnahme
- 9: Nut- und Federanordnung
- 10: Gehäuse
- 11: Bodenplatte
- 12: Einschub
- 13: Stauraum
- 14: Tragegriff
- 15: Griffteil
- 16: Griffteil

## Patentansprüche

1. Babywaage mit einer Waagschale (1) zur Aufnahme eines Babys, einer die Waagschale (1) tragenden Messeinrichtung zur Ermittlung des Gewichts des Babys und einer Anzeige (2) zum Anzeigen des ermittelten Gewichts, wobei die Messeinrichtung mehrere Wägezellen umfasst und wobei die Waagschale (1) zwei Schalenhälften (3, 4) aufweist, wobei die beiden Schalenhälften (3,4) Mittel (5) zum mechanischen und elektrischen Verbinden in eine Wägeposition aufweisen und in eine Aufbewahrungsposition zusammenlegbar sind, **dadurch gekennzeichnet, dass** die Mittel (5) aus einen Steckelemente (6) aufweisenden Steckmechanismus gebildet sind der ein Zusammenstecken und Entkoppeln der Schalenhälften ermöglicht.

2. Babywaage nach Anspruch 1, **dadurch gekennzeichnet, dass** die Steckelemente eine für den Gebrauch sicherere Positionierung der Schalenhälften zueinander vorgeben.

3. Babywaage nach einem der Ansprüche 1 oder 2, **dadurch gekennzeichnet, dass** die Steckelemente (6) eine Rastfunktion aufweisen.

4. Babywaage nach einem der Ansprüche 2 bis 3 **dadurch gekennzeichnet, dass** die Steckelemente (6) zur im Hinblick auf ihre Stromversorgung erforderlichen elektrischen Kontaktierung der Wägezellen ausgebildet sind und/oder dass die Steckelemente (6) zur im Hinblick auf eine Signalübertragung erforderlichen elektrischen Kontaktierung der Wägezellen ausgebildet sind.

5. Babywaage nach einem der Ansprüche 1 bis 4, **dadurch gekennzeichnet, dass** auf der Außenseite der Schalenhälften (3, 4) zum Aufstellen der Waagschale (1) dienende Füße vorgesehen sind.

6. Babywaage nach Anspruch 5, **dadurch gekennzeichnet, dass** die Füße derart positioniert sind, dass sie die Schalenhälften (3, 4) im aufgestellten Zustand in der Wägeposition halten.

7. Babywaage nach Anspruch 5 oder 6, **dadurch gekennzeichnet, dass** je Schalenhälfte (3, 4) drei Füße vorgesehen sind.

8. Babywaage nach einem der Ansprüche 5 bis 7, **dadurch gekennzeichnet, dass** die Füße elektronische Wägezellen enthalten.

9. Babywaage nach einem der Ansprüche 1 bis 8, **dadurch gekennzeichnet, dass** die beiden Schalenhälften (3, 4) sowohl in der verbundenen Wägeposition als auch in der zusammengelegten Aufbewahrungsposition in ihrer Position zueinander arretierbar und/oder verrastbar sind.

10. Babywaage nach einem der Ansprüche 1 bis 9, **dadurch gekennzeichnet, dass** die Schalenhälften (3, 4) über eine Nut- und Federanordnung (9) entlang ihrer Außenränder zusammenlegbar und arretierbar sind und/oder dass die Schalenhälften (3, 4) mittels Rasthaken zusammenlegbar und arretierbar sind.

11. Babywaage nach einem der Ansprüche 1 bis 10, **dadurch gekennzeichnet, dass** die Schalenhälften (3, 4) mit den Schalenhälften (3, 4) zugeordneten Magneten oder mit Elektromotoren mechanisch in der Wägeposition und/oder in der Aufbewahrungsposition arretierbar und/oder verriegelbar sind.

12. Babywaage nach einem der Ansprüche 1 bis 11, **dadurch gekennzeichnet, dass** die beiden Schalenhälften (3, 4) im zusammengelegten Zustand ein Gehäuse (10) bilden.

13. Babywaage nach Anspruch 12, **dadurch gekennzeichnet, dass** das im zusammengelegten Zustand durch die Schalenhälften (3, 4) gebildete Gehäuse (10) im Bereich der gegenseitigen Verbindung zumindest teilweise offen ist, wobei die Öffnung im Gehäuse (10) durch eine Bodenplatte (11) mit Schließ- und Arretierfunktion verschließbar ist.

14. Babywaage nach Anspruch 13, **dadurch gekennzeichnet, dass** die Bodenplatte (11) als Einschub (12) ausgebildet ist, der Stauraum (13) zur Aufbewahrung von Utensilien für Babys hat und/oder dass die Bodenplatte (11) als Einschub (12) ausgebildet ist, wobei sich der Einschub (12) mit einem durch eine umlaufende Wandung gebildeten Stauraum (13) in das Gehäuse (10) hinein erstreckt.

15. Babywaage nach einem der Ansprüche 12 bis 14, **dadurch gekennzeichnet, dass** das Gehäuse (10) einen oberen Tragegriff (14) aufweist, der im zusammengelegten Zustand durch den beiden Schalenhälften (3, 4) zugeordnete Griffteile (15,16) gebildet ist.

## Claims

1. Baby scale having a scale pan (1) for holding a baby, a measuring device which bears the scale pan (1) and is intended to determine the weight of the baby, and a display (2) for displaying the determined weight, the measuring device comprising a plurality of weighing cells, and the scale pan (1) having two pan halves (3, 4), the two pan halves (3, 4) having means (5) for mechanical and electrical connection in a weighing position and being able to be folded into a storage position, **characterized in that** the means (5) are formed from a plug-in mechanism which has plug-in elements (6) and makes it possible to plug the pan halves together and to uncouple the latter.

2. Baby scale according to Claim 1, **characterized in that** the plug-in elements predefine positioning of the pan halves with respect to one another which is safer for use.

3. Baby scale according to either of Claims 1 and 2, **characterized in that** the plug-in elements (6) have a latching function.

4. Baby scale according to either of Claims 2 and 3, **characterized in that** the plug-in elements (6) are designed to make electrical contact with the weighing cells, as required for their power supply, and/or **in that** the plug-in elements (6) are designed to make electrical contact with the weighing cells, as required in order to transmit signals.

5. Baby scale according to one of Claims 1 to 4, **characterized in that** feet which are used to erect the scale pan (1) are provided on the outside of the pan halves (3, 4).

6. Baby scale according to Claim 5, **characterized in that** the feet are positioned in such a manner that they keep the pan halves (3, 4) in the weighing position in the erected state.

7. Baby scale according to Claim 5 or 6, **characterized in that** three feet are provided for each pan half (3, 4).

8. Baby scale according to one of Claims 5 to 7, **characterized in that** the feet contain electronic weighing cells.

9. Baby scale according to one of Claims 1 to 8, **characterized in that** the two pan halves (3, 4) can be locked and/or latched in their position relative to one another both in the connected weighing position and in the folded storage position.

10. Baby scale according to one of Claims 1 to 9, **characterized in that** the pan halves (3, 4) can be folded and locked along their outer edges by means of a tongue and groove arrangement (9), and/or **in that** the pan halves (3, 4) can be folded and locked using latching hooks.

11. Baby scale according to one of claims 1 to 10, **characterized in that** the pan halves (3, 4) can be locked and/or bolted mechanically to magnets, which are assigned to the pan halves (3, 4), or to electric motors in the weighing position and/or in the storage position.

12. Baby scale according to one of Claims 1 to 11, **characterized in that** the two pan halves (3, 4) form a housing (10) in the folded state.

13. Baby scale according to Claim 12, **characterized in that** the housing (10) formed by the pan halves (3, 4) in the folded state is at least partially open in the region of the mutual connection, the opening in the housing (10) being able to be closed by a base plate (11) having a closing and locking function.

14. Baby scale according to Claim 13, **characterized in that** the base plate (11) is in the form of a plug-in unit (12) which has storage space (13) for storming utensils for babies, and/or **in that** the base plate (11) is in the form of a plug-in unit (12), the plug-in unit (12) extending into the housing (10) with a storage space (13) formed by a circumferential wall.

15. Baby scale according to one of Claims 12 to 14, **characterized in that** the housing (10) has an upper carrying handle (14) which, in the folded state, is formed by handle parts (15, 16) assigned to the two pan halves (3, 4).

## Revendications

1. Pèse-bébé comprenant un plateau de pesée (1) pour recevoir un bébé, un dispositif de mesure portant le plateau de pesée (1) pour déterminer le poids du bébé et un affichage (2) pour indiquer le poids déterminé, le dispositif de mesure comprenant plusieurs cellules de pesée et le plateau de pesée (1) présentant deux moitiés de plateau (3, 4), les deux moitiés de plateau (3, 4) présentant des moyens (5) pour une connexion mécanique et électrique dans une position de pesée et pouvant être rassemblés dans une position de rangement, **caractérisé en ce que** les moyens (5) sont formés d'un mécanisme enfichable présentant des éléments enfichables (6), qui permet un assemblage et un désaccouplement des moitiés de plateau.

2. Pèse-bébé selon à revendication 1, **caractérisé en ce que** les éléments enfichables prédéfinissent un positionnement plus sûr pour l'utilisation des moitiés de plateau l'une par rapport à l'autre.

3. Pèse-bébé selon l'une quelconque des revendications 1 ou 2, **caractérisé en ce que** les éléments enfichables (6) présentent une fonction d'encliquetage.

4. Pèse-bébé selon l'une quelconque des revendications 2 et 3, **caractérisé en ce que** les éléments enfichables (6) sont réalisés pour assurer le contact électrique des cellules de pesée nécessaire pour l'alimentation en courant, et/ou **en ce que** les éléments enfichables (6) sont réalisés pour assurer le contact électrique des cellules de pesée nécessaire en vue de la transmission de signaux.

5. Pèse-bébé selon l'une quelconque des revendications 1 à 4, **caractérisé en ce que** du côté extérieur des moitiés de plateau (3, 4) sont prévus des pieds servant à poser le plateau de pesée (1).

6. Pèse-bébé selon la revendication 5, **caractérisé en ce que** les pieds sont positionnés de telle sorte qu'ils maintiennent les moitiés de plateau (3, 4) dans la position de pesée dans l'état posé.

7. Pèse-bébé selon la revendication 5 ou 6, **caractérisé en ce que** trois pieds sont prévus pour chaque moitié de plateau (3, 4).

8. Pèse-bébé selon l'une quelconque des revendications 5 à 7, **caractérisé en ce que** les pieds contiennent des cellules de pesée électroniques.

9. Pèse-bébé selon l'une quelconque des revendications 1 à 8, **caractérisé en ce que** les deux moitiés de plateau (3, 4) peuvent être bloquées l'une par rapport à l'autre et/ou encliquetées dans leur position à la fois dans la position de pesée assemblée et dans la position de rangement repliée.

10. Pèse-bébé selon l'une quelconque des revendications 1 à 9, **caractérisé en ce que** les moitiés de plateau (3, 4) peuvent être repliées et bloquées le long de leurs bords extérieurs par le biais d'un agencement à rainure et clavette (9) et/ou **en ce que** les moitiés de plateau (3, 4) peuvent être repliées et bloquées au moyen de crochets d'encliquetage.

11. Pèse-bébé selon l'une quelconque des revendications 1 à 10, **caractérisé en ce que** les moitiés de plateau (3, 4) peuvent être bloquées et/ou verrouillées mécaniquement dans la position de pesée et/ou dans la position de rangement avec des aimants associés aux moitiés de plateau (3, 4) ou avec des moteurs électriques.

12. Pèse-bébé selon l'une quelconque des revendications 1 à 11, **caractérisé en ce que** les deux moitiés de plateau (3, 4) forment, dans l'état replié, un boîtier (10).

13. Pèse-bébé selon la revendication 12, **caractérisé en ce que** le boîtier (10), formé dans l'état replié par les moitiés de plateau (3, 4), est au moins partiellement ouvert dans la région de l'assemblage mutuel, l'ouverture dans le boîtier (10) pouvant être fermée par une plaque de fond (11) ayant une fonction de fermeture et de blocage.

14. Pèse-bébé selon la revendication 13, **caractérisé en ce que** la plaque de fond (11) est réalisée sous forme d'insert (12) qui dispose d'un espace de rangement (13) pour ranger des ustensiles pour le bébé et/ou **en ce que** la plaque de fond (11) est réalisée sous forme d'insert (12), l'insert (12) s'étendant dans le boîtier (10) avec un espace de rangement (13) formé par une paroi périphérique.

15. Pèse-bébé selon l'une quelconque des revendications 12 à 14, **caractérisé en ce que** le boîtier (10) présente une poignée ce préhension supérieure (14) qui, dans l'état replié, est formée par des parties de préhension (15, 16) associées aux deux moitiés de plateau (3, 4).
